# EUROPEAN PATENT SPECIFICATION

(11) **EP 4 316 717 B1**
(45) Date of publication and mention of the grant of the patent: **01.04.2026**
(21) Application number: 23208536.5
(22) Date of filing: 11.03.2020
(51) Int. Cl.: B23K 9/16, B23K 9/173, B23K 9/26, B23K 9/28, B23K 9/32, B23K 9/29

(54) **GAS METAL ARC WELDING TORCH**
GASMETALLLICHTBOGENSCHWEISSBRENNER
CHALUMEAU DE SOUDAGE À L'ARC DE MÉTAL GAZEUX

(30) Priority: 12.03.2019 CN 201910184634
(43) Date of publication of application: 07.02.2024
(62) Divisional of application: 20712655.8
(73) Proprietor: Jinan Uniarc Welding Technology Limited, Jinan 250102 (CN)
(72) Inventor: Parker, Tracy, Bewdley, DY14 9RP (GB)
(74) Representative: Noble, Frederick

(56) References cited:
- DE-B- 1 077 806
- US-A- 3 697 721
- US-A1- 2002 113 046
- US-A1- 2007 262 060
- US-A1- 2014 319 103

## Description

The present invention relates to a gas metal arc welding torch, in particular to a welding torch having features designed to facilitate removal of weld spatter.

### BACKGROUND TO THE INVENTION

Gas Metal Arc Welding (GMAW) is one of the most common welding processes in industrial use today. GMAW welding processes include Metal Inert Gas (MIG) and Metal Active Gas (MAG) welding. In both processes, a gas is supplied to the weld site. The gas is primarily a shielding gas, and in MIG welding the gas is an inert gas, for example argon or carbon dioxide. In MAG welding the gas mixture may contain oxygen or other gasses which interact with the welding process.

Whether the gas is purely a shield gas (in MIG welding) or whether it has an active component (in MAG welding), it is important that air from the atmosphere is substantially excluded from the weld site.

A removable nozzle, fixed to the end of the welding torch and surrounding the contact tip, is typically used to contain and direct the welding gas so that it flows onto the weld site and provides the correct local atmosphere at the weld site. Ideally the flow through the nozzle and onto the workpiece is substantially lamina flow. Poor sealing around the back of the nozzle (i.e. the closed end of the nozzle) can allow air from the atmosphere to be drawn into the gas stream. This dilutes or contaminates the welding gas and can result in a poor quality or low strength weld.

Faced with a leaking nozzle, welders will often attempt to remediate the system simply by turning up the flow of gas. However, this wastes weld gas, which is expensive.

A further problem encountered in GMAW processes is that small droplets of molten metal and welding debris tend to be scattered or splashed during the welding process. The common term for these droplets is "spatter" or "weld spatter". Spatter can stick to the workpiece, or any surrounding metallic material. However, spatter can become particularly problematic when it builds up on the welding nozzle itself. Spatter enters the nozzle through the open end of the nozzle. A build-up of spatter inside the nozzle can disrupt the flow of gas, creating non-lamina and unpredictable flows causing poor shielding and thus an erratic or poor-quality weld. Spatter can also make removal of the nozzle difficult, since the nozzle in effect becomes welded to metallic parts inside the nozzle, such as the tip adaptor or the torch body.

Currently, the only solution to the problem of spatter accumulation has been to treat surfaces of the welding torch with compounds which are designed to reduce adherence of weld spatter. However, spatter still accumulates and can still be difficult to remove. Typically, a ring of spatter which builds up around the open end of the nozzle can be removed relatively easily with pliers. However, spatter which builds up inside the nozzle can be extremely difficult to remove. Depending on the materials and currents used, spatter removal may need to occur frequently, as often as every ten minutes, resulting in a loss of productivity. Cleaning needs to be carefully undertaken so as not to damage the contact tip and other components. Careful and thorough removal of spatter is time consuming. Some welders try to dislodge spatter by hitting the torch repeatedly against a solid surface. This is not recommended, especially with modern torches which are increasingly complex. Water-cooled torches are especially vulnerable to damage, and all torches can be damaged by rough treatment. Unfortunately, many torches are damaged in an effort to remove welding spatter quickly, without taking the necessary time and care.

It is an object of the present invention to reduce the above mentioned problems.

US 2014/319103 relates to a gas shielded arc welding assembly including an adapter, a diffuser, and a nozzle. Shielding gas is directed towards a tip portion of a contact tip through discharge passages defined by a groove in an engagement end of the nozzle and an outer periphery of the diffuser.

DE 1077806 relates to a gas shielded welding torch including an exchangeable nozzle surrounding a non-consumable electrode, wherein the nozzle constricts the gas flowing through it. US 3 697 721 A relates to a removable nozzle for a gas shielded welding torch which is surfaced with pyrolytic graphite to prolong nozzle life and to render the inner surface thereof less adherent to weld splatter to facilitate cleaning of the torch.

US 2002/113046 relates to a MIG welding gun including a diffuser and a nozzle assembly. A single turn of the nozzle assembly on the diffuser causes simultaneous engagement of a nozzle insert and diffuser back ramps and of the nozzle insert and diffuser thread ramps. Such engagement centres the nozzle to be concentric with the diffuser and also produces a wedging action that retains the nozzle assembly on the diffuser until a relatively substantial reverse torque is applied to the nozzle assembly.

US 2007/262060 relates to an apparatus and methods for thermally processing a workpiece including directing a plasma arc to the workpiece and using a dielectric shield or dielectric coating to protect a forward portion of a plasma arc torch.

### STATEMENT OF INVENTION

According to the invention, there is provided a welding torch for a Gas Metal Arc Welding (GMAW) process according to claim 1.

The substantially continuous curved surface is preferably a concave surface which faces the open end of the torch body. By providing a smooth surface, any weld spatter accumulating at the interface is relatively easy to remove, by axial and/or rotational movement of the nozzle with respect to the torch body.

The concave surface facing the open end of the torch body, in effect forms a cavity formed from two abutting surfaces. The cavity is designed to catch the weld spatter but make it easy to remove. Making the two abutting surfaces from different materials (for example, a metal and a non-metal, like a thermosetting resin, particularly a phenolic resin) is found to be particularly advantageous.

The continuous curved surface at the exposed interface provides a cavity where spatter can build up and accumulate into a solid ring of hard droplets. This can be removed quite easily, in the same way that a solid ring of spatter which commonly builds up around the front of a welding nozzle is currently removed.

The break between the nozzle and the part fixed to the torch body (e.g. the tip adaptor) is preferably substantially central around the concave cavity, i.e. at a rearmost point of the concave cavity.

Preferable / optional features of the invention are set out in claims 2 to 15.

### BRIEF DESCRIPTION OF THE DRAWINGS

For a better understanding of the present invention, and to show more clearly how it may be carried into effect, reference will now be made by way of example only to the accompanying drawings, in which:
Figure 1 is an exploded view of a welding torch head according to the invention;
Figure 2 is a perspective view of a detachable nozzle, part of the welding torch of Figure 1; and
Figure 3 is a cross-section through the nozzle, when fitted to the welding torch head of Figure 1.

### DESCRIPTION OF PREFERRED EMBODIMENTS

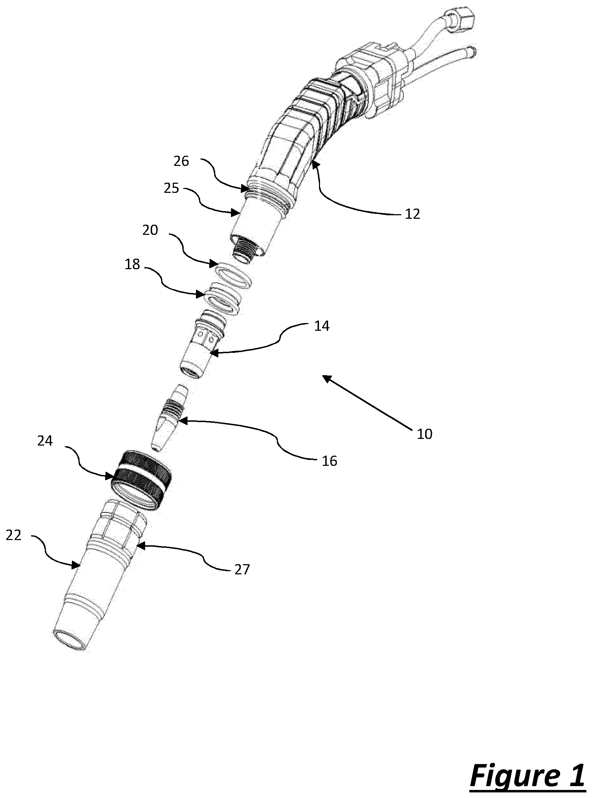

Referring firstly to Figure 1, a welding torch is indicated generally at 10. The welding torch comprises a torch body 12, a tip adaptor 14 and a contact tip 16 which, when the torch is assembled, extends away from the torch body 12 and is connected to the torch body 12 via the tip adaptor 14.

Figure 1 shows a liquid-cooled torch, however the invention is equally applicable to gas-cooled or air-cooled torches.

Note that for the purposes of this specification, the assembly shown in Figure 1 is a "welding torch", sometimes called a "welding torch head". It is appreciated that in use, hoses, cables and a connection block will be required, and these may be supplied as part of a package with a welding torch.

A thermal isolator 18 and sealing ring 20, are provided between the tip adaptor 14 and the torch body 12. These components provide for a sealing surface preventing ingress of air around the back of the nozzle, when the welding torch is assembled.

A nozzle 22 fits over the front end (i.e. the end facing downwards in Figure 1) of the torch body 12. When the torch 10 is assembled, the nozzle 22 substantially surrounds the contact tip 16 and tip adaptor 14, and guides welding gas - which may be inert or active gas - onto the workpiece.

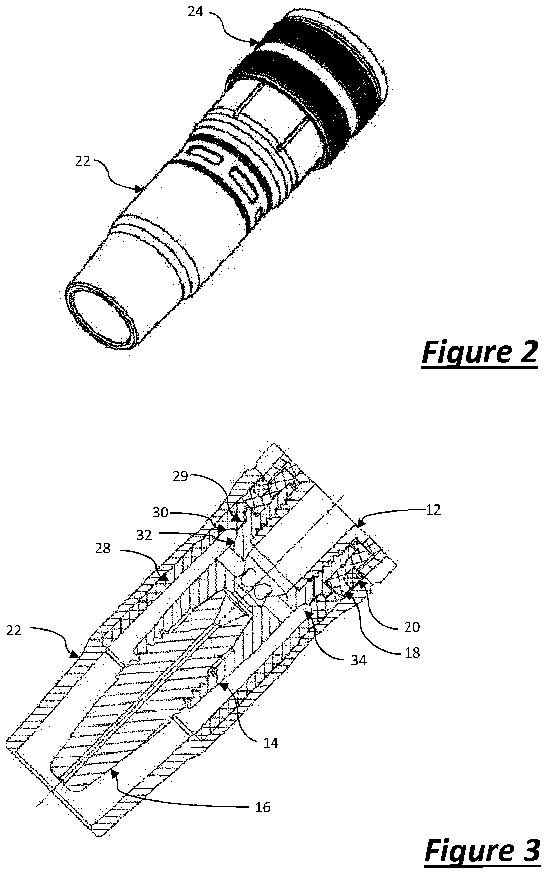

A ring 24 is provided, which is assembled to the back end of the nozzle 22 (see Figure 2). The ring 24 is retained and substantially fixed axially on the nozzle 22, but is free to rotate with respect to the nozzle 22. The ring is internally screw-threaded, and the thread of the ring 24 corresponds with an external screw thread 26 near the front of the torch body 12.

The ring 24 is retained and substantially fixed axially on the nozzle 22 so that screwing or unscrewing the screw thread of the ring 24 from the screw thread 26 of the torch body 12 will cause the whole of the nozzle 22 to move longitudinally / axially with respect to the torch body 12. It will be understood that there may be a small amount of freedom of axial movement of the ring 24 with respect to the nozzle, but this freedom must be a shorter distance than the axial extent of the screw thread 26. For example there may be a freedom of axial movement of the ring 24 with respect to the nozzle of around 0.5mm. The amount of axial movement of the nozzle 22 caused by screwing or unscrewing of the thread may be small, for example less than 2mm or even less than 1mm, but the thread is designed to deliver a large mechanical advantage in causing this axial movement, and even a small extent of movement is found to be enough to break up accumulated spatter and allow easy release of the nozzle 22 from the torch body 12.

The thread 26 is a single start thread to provide maximum mechanical advantage so that the ring 24 may be turned relatively easily to provide a large axial force to help remove the nozzle 22 from the torch body 12. In some embodiments, a multi-start thread may be provided, but a single start thread is preferable for maximum mechanical advantage. A single start thread also allows for good mechanical advantage with a relatively coarse thread. A fine thread would give greater mechanical advantage, but may be more vulnerable to damage and more difficult to use, for example when wearing gloves.

The torch body 12 includes a smooth substantially cylindrical nozzle seating region 25, extending in front of the thread 26. The nozzle 22 includes a corresponding smooth seating region 27, designed to press over the seating region 25 of the nozzle. A number of slots, running down the sides of the nozzle 22 and running parallel to a central axis of the nozzle 22, are provided to facilitate slight radial expansion / compression of the seating region 27 of the nozzle 22. For example, there may be six slots.

Smooth seating regions and slots for pressing a nozzle onto a welding torch are known in the prior art. However, by adding a threaded ring, not only is a mechanical advantage obtained when removing the nozzle, but centring of the nozzle during fitting is made substantially less difficult and more accurate, resulting in better lamina gas flow and a better weld quality.

Figure 3 is a cross-section of the nozzle 22, the contact tip 16, the tip adaptor 14 and part of the torch body 12. The nozzle 22 is made from nickel-plated copper, but includes an insert 28. The insert 28 is made from a phenolic thermosetting resin. The insert 28 takes the form of a sleeve which is permanently fixed inside the nozzle, to form a thickening of the nozzle wall, by crimping. The insert includes an internal flange 29 which extends radially towards the centre of the nozzle, by about 1mm - 2mm, around the entire internal circumference of the nozzle. The internal flange 29 meets the internal wall of the insert 28, where the internal wall runs parallel to a central axis of the nozzle, at a corner 30 which is a radiused curve. A corresponding corner 32 of the tip adaptor 14 is also a smooth radiused curve, where the tip adaptor broadens outwardly to meet the internal flange 29 of the insert 28. The interface between the insert 28 and the tip adaptor 14 forms a spatter collection chamber, as described in further detail below.

The radius of each curve is for example about 1.5mm.

Where the smooth curved corner 30 of the insert 28 meets the smooth curved corner 32 of the tip adaptor, a concave cavity 34 is defined. The concave cavity 34 is at the only part of the interface between the nozzle 22 and the other parts of the torch 10 which is exposed to weld spatter which potentially enters through the open front end of the nozzle 22. The concave cavity 34 forms a spatter collection chamber. Due to the smooth continuous curved surface of the cavity, as well as the dissimilar materials at the interface, one of which is non-metal, the adherence of weld spatter is substantially reduced. Any weld spatter which does accumulate will tend to form a ring around the tip adaptor 14, in the cavity 34. Any adherence will be primarily to the metallic tip adaptor 14 and not to the plastic insert 28. To remove weld spatter, the nozzle ring 24 can be rotated, which with a great mechanical advantage forces the nozzle 22 slightly forward with respect to the torch body 12. When this is done, the corner 30 of the insert 28 will move forwards with respect to the corner 32 of the tip adaptor 14, and will tend to detach the ring of accumulated weld spatter from the tip adaptor 14, to the extent that it has adhered.

After forcing the nozzle 22 slightly forward by using the mechanical advantage of the screw thread, and breaking any adhered weld spatter, the nozzle may be twisted and simultaneously pulled forward, removing the nozzle from the torch body and in doing so removing the vast majority of accumulated weld spatter.

As a result, weld spatter can easily and quickly be removed periodically during a welding job. This increases welder productivity, should result in a higher quality weld, and reduces damage to parts of the welding torch (especially the contact tip and tip adaptor but also the expensive torch body) and thus increases their lifetime and reduces replacement costs.

Figure 3 also shows how the thermal isolator 18 and sealing ring 20 provide for a leak-free seal where the closed back end of the nozzle connects to the torch body 12. The thermal isolator is made from a high temperature resin, for example a phenolic resin. The thermal isolator 18 is in the form of a collar which snaps over the back for the tip adaptor 14, and is retained on the back of the tip adaptor by a circumferential ridge running around the tip adaptor 14. The collar has a flange, providing a forward-facing surface (i.e. facing towards the open end of the nozzle when assembled) and a rear-facing surface (i.e. facing towards the torch body 12 when assembled). The forward-facing surface of the thermal isolator 18 abuts a rear-facing surface of the nozzle insert 28. A sealing ring 20 sits behind the rear-facing surface of the thermal isolator 18. The sealing ring 20 is made from a compressible high-temperature engineering plastic, and has a radius slightly greater than the radius of the flange of the thermal isolator 18.

When assembled. The sealing ring 20 provides a tight seal against the inner wall of the nozzle, forward of the cut-outs of the nozzle. This effectively and completely seals the nozzle, preventing leaks and saving expensive weld gas.

It will be understood that the description of the embodiments is given by way of example only, and the skilled person will envisage various modifications, improvements and alternatives within the scope of the invention. The invention is set out in the claims.

## Claims

1. A welding torch (10) for a Gas Metal Arc Welding (GMAW) process, the welding torch (10) having a torch body (12), a welding tip (16) extending from the torch body (12), and a detachable nozzle (22) which substantially surrounds the welding tip (16) in use to direct gas around the welding tip (16) and onto a workpiece, the nozzle (22) having a front end which faces the workpiece in use and a rear end which attaches to the torch body (12) in use, wherein the nozzle (22) when fitted to the torch body (12) abuts the torch body (12) or a component fixed to the torch body (12) at an interface, the interface where it is exposed to the open front of the nozzle (22) forming a substantially continuous curved surface, **characterized in that** the curved surface is made partly of a surface of the nozzle and partly of a surface of a part inside the nozzle.

2. A welding torch (10) as claimed in claim 1, in which the curved surface is a concave surface which faces the open end of the torch body (12).

3. A welding torch (10) as claimed in claim 1 or claim 2, in which at least a part of the nozzle (22) which forms a part of the interface exposed to the open front of the nozzle (22), is made from a non-metallic material.

4. A welding torch (10) as claimed in any of claims 1 to 3, in which the nozzle (22) abuts a tip adaptor (14) of the welding torch (10) at the point where the interface is exposed.

5. A welding torch (10) as claimed in any of claims 3 or 4, in which the non-metallic material is a thermosetting resin, for example a phenolic resin.

6. A welding torch (10) as claimed in any of claims 3 to 5, in which the non-metallic material is only a part of the nozzle (22).

7. A welding torch (10) as claimed in claim 6, in which the non-metallic material is provided as an insert (28) to the nozzle (22).

8. A welding torch (10) as claimed in claim 6 or claim 7, in which the nozzle (22) is made substantially from metal.

9. A welding torch (10) as claimed in claim 8, in which the nozzle (22) is made substantially from copper.

10. A welding torch (10) as claimed in any of claims 1 to 9, in which a ring (24) is provided, the ring (24) being substantially axially fixed to the nozzle (22) at the rear end of the nozzle (22), and the ring (24) being rotatable with respect to the nozzle (22), the ring (24) having a screw thread and the torch body (12) having a corresponding screw thread (26).

11. A welding torch (10) as claimed in claim 10, in which the screw thread is a single start screw thread.

12. A welding torch (10) as claimed in any of claims 1 to 11, in which the nozzle (22) is provided with linear slots spaced around a rear section of the nozzle (22), each slot running from the rear of the nozzle (22), along a portion of the nozzle (22) toward the front of the nozzle (22).

13. A welding torch (10) as claimed in any of claims 1 to 12, in which a sealing ring (20) is provided between the nozzle (22) and parts of the welding torch (10) which are fixed to the torch body (12), and which are located inside the nozzle (22) when assembled.

14. A welding torch (10) as claimed in claim 13, in which the sealing ring (20) is a compressible high-temperature material.

15. A welding torch (10) as claimed in claim 13 or 14, in which a thermal isolator (18) is provided in the form of a collar around a part of the torch (10), the thermal isolator (18) including a flange, and the sealing ring (20) being provided behind the flange of the thermal isolator (18).

## Patentansprüche

1. Schweißbrenner (10) für ein Metall-Schutzgasschweißverfahren (GMAW), wobei der Schweißbrenner (10) einen Brennerkörper (12), eine Schweißspitze (16), die sich vom Brennerkörper (12) erstreckt, und eine abnehmbare Düse (22) aufweist, die die Schweißspitze (16) im Gebrauch im Wesentlichen umgibt, um Gas um die Schweißspitze (16) herum und auf ein Werkstück zu leiten, wobei die Düse (22) ein vorderes Ende, das dem Werkstück im Gebrauch zugewandt ist, und ein hinteres Ende aufweist, das im Gebrauch an dem Brennerkörper (12) befestigt ist, wobei die Düse (22), wenn sie an dem Brennerkörper (12) angebracht ist, an einer Schnittstelle an dem Brennerkörper (12) oder einer an dem Brennerkörper (12) befestigten Komponente anliegt, wobei die Schnittstelle, an der sie der offenen Vorderseite der Düse (22) ausgesetzt ist, eine im Wesentlichen durchgehende gekrümmte Oberfläche bildet, **dadurch gekennzeichnet, dass** die gekrümmte Oberfläche teilweise aus einer Oberfläche der Düse und teilweise aus einer Oberfläche eines Teils innerhalb der Düse besteht.

2. Schweißbrenner (10) nach Anspruch 1, wobei die gekrümmte Oberfläche eine konkave Oberfläche ist, die dem offenen Ende des Brennerkörpers (12) zugewandt ist.

3. Schweißbrenner (10) nach Anspruch 1 oder Anspruch 2, wobei mindestens ein Teil der Düse (22), der einen Teil der Schnittstelle bildet, die der offenen Vorderseite der Düse (22) ausgesetzt ist, aus einem nichtmetallischen Material besteht.

4. Schweißbrenner (10) nach einem der Ansprüche 1 bis 3, wobei die Düse (22) an einem Spitzenadapter (14) des Schweißbrenners (10) an der Stelle anliegt, an der die Schnittstelle freiliegt.

5. Schweißbrenner (10) nach einem der Ansprüche 3 oder 4, wobei das nichtmetallische Material ein Duroplast ist, beispielsweise ein Phenolharz.

6. Schweißbrenner (10) nach einem der Ansprüche 3 bis 5, wobei das nichtmetallische Material nur ein Teil der Düse (22) ist.

7. Schweißbrenner (10) nach Anspruch 6, wobei das nichtmetallische Material als Einsatz (28) für die Düse (22) vorgesehen ist.

8. Schweißbrenner (10) nach Anspruch 6 oder Anspruch 7, wobei die Düse (22) im Wesentlichen aus Metall besteht.

9. Schweißbrenner (10) nach Anspruch 8, wobei die Düse (22) im Wesentlichen aus Kupfer besteht.

10. Schweißbrenner (10) nach einem der Ansprüche 1 bis 9, wobei ein Ring (24) vorgesehen ist, wobei der Ring (24) im Wesentlichen axial an der Düse (22) an dem hinteren Ende der Düse (22) befestigt ist und der Ring (24) in Bezug auf die Düse (22) drehbar ist, wobei der Ring (24) ein Schraubengewinde aufweist und der Brennerkörper (12) ein entsprechendes Schraubengewinde (26) aufweist.

11. Schweißbrenner (10) nach Anspruch 10, wobei das Schraubengewinde ein eingängiges Schraubengewinde ist.

12. Schweißbrenner (10) nach einem der Ansprüche 1 bis 11, wobei die Düse (22) mit linearen Schlitzen versehen ist, die um einen hinteren Abschnitt der Düse (22) verteilt sind, wobei jeder Schlitz von der Rückseite der Düse (22) entlang eines Abschnitts der Düse (22) zu der Vorderseite der Düse (22) verläuft.

13. Schweißbrenner (10) nach einem der Ansprüche 1 bis 12, wobei ein Dichtungsring (20) zwischen der Düse (22) und Teilen des Schweißbrenners (10) vorgesehen ist, die an dem Brennerkörper (12) befestigt sind und sich in dem zusammengebauten Zustand innerhalb der Düse (22) befinden.

14. Schweißbrenner (10) nach Anspruch 13, wobei der Dichtungsring (20) ein komprimierbares Hochtemperaturmaterial ist.

15. Schweißbrenner (10) nach Anspruch 13 oder 14, wobei ein Wärmeisolator (18) in Form eines Kragens um einen Teil des Brenners (10) herum vorgesehen ist, wobei der Wärmeisolator (18) einen Flansch einschließt und der Dichtungsring (20) hinter dem Flansch des Wärmeisolators (18) vorgesehen ist.

## Revendications

1. Torche de soudage (10) pour un procédé de soudage à l'arc sous gaz et métal (GMAW), la torche de soudage (10) ayant un corps de torche (12), une pointe de soudage (16) s'étendant à partir du corps de torche (12), et une buse amovible (22) qui entoure sensiblement la pointe de soudage (16) en cours d'utilisation pour diriger un gaz autour de la pointe de soudage (16) et sur une pièce à usiner, la buse (22) ayant une extrémité avant qui fait face à la pièce à usiner en cours d'utilisation et une extrémité arrière qui s'attache au corps de torche (12) en cours d'utilisation, dans laquelle la buse (22) lorsqu'elle est montée sur le corps de torche (12) jouxte le corps de torche (12) ou un composant fixé au corps de torche (12) au niveau d'une interface, l'interface, au niveau d'un point où elle est exposée à l'avant ouvert de la buse (22), formant une surface incurvée sensiblement continue, **caractérisée en ce que** la surface incurvée est constituée en partie d'une surface de la buse et en partie d'une surface d'une partie à l'intérieur de la buse.

2. Torche de soudage (10) selon la revendication 1, dans laquelle la surface incurvée est une surface concave qui fait face à l'extrémité ouverte du corps de torche (12).

3. Torche de soudage (10) selon la revendication 1 ou la revendication 2, dans laquelle au moins une partie de la buse (22) qui forme une partie de l'interface exposée à l'avant ouvert de la buse (22), est constituée d'un matériau non métallique.

4. Torche de soudage (10) selon l'une quelconque des revendications 1 à 3, dans laquelle la buse (22) jouxte un adaptateur de pointe (14) de la torche de soudage (10) au niveau du point où l'interface est exposée.

5. Torche de soudage (10) selon l'une quelconque des revendications 3 ou 4, dans laquelle le matériau non métallique est une résine thermodurcissable, par exemple une résine phénolique.

6. Torche de soudage (10) selon l'une quelconque des revendications 3 à 5, dans laquelle le matériau non métallique n'est qu'une partie de la buse (22).

7. Torche de soudage (10) selon la revendication 6, dans laquelle le matériau non métallique est disposé sous forme d'un insert (28) dans la buse (22).

8. Torche de soudage (10) selon la revendication 6 ou la revendication 7, dans laquelle la buse (22) est constituée essentiellement de métal.

9. Torche de soudage (10) selon la revendication 8, dans laquelle la buse (22) est constituée sensiblement de cuivre.

10. Torche de soudage (10) selon l'une quelconque des revendications 1 à 9, dans laquelle une bague (24) est fournie, la bague (24) étant sensiblement fixée axialement à la buse (22) à l'extrémité arrière de la buse (22), et la bague (24) étant rotative par rapport à la buse (22), la bague (24) ayant un filetage de vis et le corps de torche (12) ayant un filetage de vis (26) correspondant.

11. Torche de soudage (10) selon la revendication 10, dans laquelle le filetage de vis est un filetage de vis à un seul filet.

12. Torche de soudage (10) selon l'une quelconque des revendications 1 à 11, dans laquelle la buse (22) est dotée de fentes linéaires espacées autour d'une section arrière de la buse (22), chaque fente s'étendant de l'arrière de la buse (22), le long d'une portion de la buse (22) vers l'avant de la buse (22).

13. Torche de soudage (10) selon l'une quelconque des revendications 1 à 12, dans laquelle une bague d'étanchéité (20) est disposée entre la buse (22) et des parties de la torche de soudage (10) qui sont fixées au corps de torche (12), et qui sont situées à l'intérieur de la buse (22) lorsqu'elles sont assemblées.

14. Torche de soudage (10) selon la revendication 13, dans laquelle la bague d'étanchéité (20) est un matériau compressible à haute température.

15. Torche de soudage (10) selon la revendication 13 ou 14, dans laquelle un isolateur thermique (18) est disposé sous la forme d'un collier autour d'une partie de la torche (10), l'isolateur thermique (18) comportant une bride, et la bague d'étanchéité (20) étant disposée derrière la bride de l'isolateur thermique (18).
